(19) Europäisches Patentamt
European Patent Office
Office européen des brevets

(11) EP 4 657 060 A1

(12) EUROPEAN PATENT APPLICATION

(43) Date of publication:
03.12.2025 Bulletin 2025/49

(21) Application number: 24179080.7

(22) Date of filing: 30.05.2024

(51) International Patent Classification (IPC):
G01N 29/06 (2006.01)   G01Q 60/32 (2010.01)

(52) Cooperative Patent Classification (CPC):
G01N 29/0681; G01Q 60/32

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(71) Applicant: Nederlandse Organisatie voor toegepast-natuurwetenschappelijk Onderzoek TNO
2595 DA 's-Gravenhage (NL)

(72) Inventors:
• VAN NEER, Paul Louis Maria Joseph
2595 DA 's-Gravenhage (NL)

• QUESSON, Benoit André Jacques
2595 DA 's-Gravenhage (NL)
• VAN ES, Maarten Hubertus
2595 DA 's-Gravenhage (NL)
• VAN RIEL, Martinus Cornelius Johannes Maria
2595 DA 's-Gravenhage (NL)
• REYES HERNANDEZ, Juan Xavier
2595 DA 's-Gravenhage (NL)
• WINTERS, Jasper
2595 DA 's-Gravenhage (NL)
• VAN WILLIGEN, Douwe Manuel
2595 DA 's-Gravenhage (NL)

(74) Representative: V.O.
P.O. Box 87930
2508 DH Den Haag (NL)

(54) CONTACT ACOUSTIC MICROSCOPE AND METHOD OF OPERATING THE SAME

(57) A contact acoustic microscope (1) is disclosed that comprises a scanning head (20) with a tip (21), a scanning actuator (31), a tip actuator (4), a high frequency signal source (5), a transducer (6) coupled thereto, an acoustic sensor (6), a signal processor (10) and an actuator controller (11). The scanning actuator (31) laterally displaces the scanning head (20) relative to a sample (S) along a scanning path (P) in a scanning plane (x,y). The tip actuator (4) oscillates the tip in a direction (z) transverse to the scanning plane to therewith provide for a time-dependent tip-sample contact surface (A(t)). The high frequency signal source (5) and the transducer (6) coupled thereto generate an acoustic signal that is provided through the tip of the probe to the sample. The acoustic sensor (6) provides a sense signal (Ssns) indicative for an acoustic signal received from the sample via the tip, which is processed by the signal processor (10) to render subsurface information about the sample. The actuator controller (11) controls the scanning actuator (3) and the tip actuator (4). The motion compensator compensates a lateral movement of the scanning head to minimize a displacement of the tip (2) relative to the sample (S) while the tip (21) is in contact with the sample (S).

Fig. 1

**Description**

Acoustic microscopy is a valuable tool for identifying subsurface features in a sample. With this technology a probe is used to induce an acoustic wave in the sample and to detect reflections of the acoustic wave at features below a sample surface. The phase difference between the input signal with which the acoustic wave is induced and the output signal resulting from the detected acoustic wave is indicative for a depth of the subsurface features. Also amplitude and frequency variations can be used to characterize the output signal (echo) and therewith the subsurface features. For medical applications acoustic microscopy is based on a piezo on top of a delay line and a geometric lens. The acoustic signal is coupled into the sample with a liquid layer on the sample surface. See for example Weiss, Lemor et al., IEEE Trans. Ultrason. Ferroelectr. Freq. Contr., 54 2257, 2007. In the semiconductor industry the presence of a liquid layer on top of the sample is however typically not desired. However, the absence of an intermediate liquid layer requires that a direct mechanical contact is present between a tip of the probe and the sample surface in order to allow a transfer of the acoustical energy between the tip and sample both in sending and reception . In order to generate an image of the subsurface features of the sample a scanning movement is performed. According to a known approach the scanning is performed in permanent contact with the sample surface. This approach however causes a significant damage to the sample. According to another approach, also denoted as tapping mode, the probe is excited, so that it performs an oscillating motion. The risk of damaging the sample is significantly mitigated therewith, but also the efficiency with which the measurement can be performed is significantly affected, as only during a short time interval in each oscillatory motion a sufficient contact area is available to provide for an acoustic signal transfer between the probe and the sample. In a still further approach also denoted as point to point approach, the tip is alternatingly brought into contact with the sample, kept in the contact position to perform a measurement, retracted, and moved to a subsequent position. Contrary to the tapping mode this does not require a self probe oscillation. Also in this approach the risk of damaging the sample is significantly mitigated, but the efficiency with which the measurement can be performed is even lower, because after each movement a waiting time is required to allow oscillations to dampen out.

SUMMARY

According to a first aspect of the present invention a contact acoustic microscope is provided that comprises a scanning head with a tip, a scanning actuator, a tip actuator, a high frequency signal source, a transducer coupled thereto, an acoustic sensor, a signal processor and an actuator controller.

In operation the scanning actuator laterally displaces the scanning head with a lateral velocity v(t) relative to the sample surface along a scanning path in a scanning plane (x,y). In one example the scanning actuator is configured to perform the lateral displacement in a single lateral direction. In other examples the scanning actuator is configured to perform the lateral displacement in arbitrary lateral directions, i.e. configured to perform displacements within a 2D-range of the scanning plane.

The tip actuator is configured for oscillating the tip in a direction transverse to the scanning plane, therewith providing for a time-varying contact surface A(t) between the tip and the sample.

The tip is usually provided at a free end of a cantilever mounted on the scanning head. However also other configurations are possible, for example a membrane comprising a tip.

The tip actuator typically also provides for maintaining a setpoint of the probe tip, i.e. an average height (z-position) of the tip relative to the sample surface. Alternatively, separate actuators may be provided for the purpose of maintaining the setpoint and for providing the oscillating motion. It is noted that a relative movement of the scanning head relative to the sample surface may be provided by a movement of the scanning head or a movement of the sample or both. For example a relative movement of the scanning head relative to the sample surface in the z-direction may be provided by a movement in the z-direction of the scanning head, of the sample or by a combination of both. Likewise a relative movement of the scanning head relative to the sample surface in a lateral direction may be provided by a movement in the lateral direction of the scanning head, of the sample or by a combination of both. The high frequency signal source and the transducer coupled thereto are configured for generating an acoustic signal to be provided through the tip to the sample and the acoustic sensor is configured for providing a sense signal indicative for an acoustic signal originating from the sample to the tip. The signal processor is configured for processing the sense signal to render data of sub-surface structures in the sample.

According to the present invention, the contact acoustic microscope comprises a motion compensator to compensate a lateral movement of the scanning head to minimize a displacement of the tip relative to the sample while the tip is in contact with the sample.

Therewith, it is achieved that the contact surface is relatively large when the lateral velocity is low and reversely that the contact surface is relatively small or zero when the lateral velocity is high. In this way the global lateral motion of the scanning head can continue while the tip contacts the sample, so that the acoustic measurement can be performed at high efficiency with a low risk of damaging the sample. Acoustic sensing preferably takes place when the tip sample contact diameter is approximately half the wavelength of the acoustic signal. Therewith, a high sense signal magnitude is obtained while the acoustic field still has a an optimally large opening angle. A smaller tip-sample contact diameter also is favorable for a large opening angle, but has the disadvantage of a relatively low sense signal magnitude. Also, with a smaller tip-sample contact diameter more acoustic energy tends to be lost in unwanted wave modes, such as shear waves. The sense signal magnitude may be further increased by increasing the tip-sample contact diameter at the cost of a limitation of the opening angle.

Due the fact that the motion compensator compensates the lateral movement of the scanning head to minimize a displacement of the tip relative to the sample while the tip is in contact with the sample, the scanning head itself can perform a continuous motion during the measurement procedure, so that substantial mechanical oscillations are avoided.

In one embodiment the motion compensator of the contact acoustic microscope comprises a compensation actuator that counteracts a motion induced by the scanning actuator while the tip is in contact with the sample. Therewith the scanning actuator that is configured to displace a relatively heavy mass can perform a continuous movement, while the compensation actuator, which only has to displace a relatively small mass, can counteract this movement while the tip is in contact with the sample. Therewith a mechanical load to other components of the contact acoustic microscope is reduced. In an example the compensation actuator performs a rotating movement around an axis transverse to a motion direction of the scanning head and transverse to a normal of the scanning plane. This is advantageous in that the movement of the scanning actuator is continuous, which further mitigates a mechanical load to the acoustic microscope.

In some examples friction of the tip and the sample is reduced by providing the tip or an interface layer on a surface of the tip in contact with the sample surface of a material having low friction with the sample surface. Therewith the tip may even move relative to the sample while still being in contact with minimum damage at a particular static force (with a particular tip sample diameter) so that the compensation actuator does not need to completely compensate the scanning motion. Exemplary materials with which this can be achieved are PTFE, POM, PE, PI, Graphite and MoS2. Alternatively or additionally this can be achieved by providing for a smooth surface of the tip and of the sample.

In some embodiments the motion compensator of the contact acoustic microscope comprises a flexible element coupling the tip. The motion compensator is configured to deform elastically, while the scanning actuator laterally displaces the head and the tip sticks at a position where it is in contact with the sample. This measure may be provided as an alternative of an embodiment using a compensation actuator is or may be provided in a combination therewith.

In an example of these embodiments, the flexible element comprises a cantilever with a support portion and a pair of suspension members extending from the support portion and wherein the tip is suspended at mutually opposite lateral sides to an end of a respective one of the suspension members. In one form the support portion bifurcates into a first and a second extension portion and each suspension member suspends the tip at a respective side to a respective end of a respective extension portion. The suspension members are for example torsion beams that are configured to allow the tip to rotate about an axis defined by the suspension members relative to the scanning head. Therewith, in this embodiment the tip, when in contact with the sample, can maintain a fixed relative position relative to the sample during the scanning motion of the head.. Therewith a lateral displacement of the tip relative to the sample during contact is mitigated. The inventors recognized that the flexible element in these embodiments also mitigates a further undesired behavior that is described as follows. For performing a measurement the tip needs to be pressed against the sample with a relatively high pressure to achieve a sufficiently large contact surface. After the tip has approached the surface the pressure on the tip is further increased to obtain the required contact surface. It is conceivable in conventional cantilever designs that the increased flexure of the cantilever also results in a lateral force on the tip. If this lateral force exceeds the friction between the sample surface and the tip surface, this lateral force causes a lateral displacement of the tip relative to the sample surface. This involves the risk that the sample surface is damaged and further causes uncertainties in the exact location of the scanning point as it is not exactly known how far the tip will laterally move with respect to the position where it first contacted the sample surface. In case that a passive motion compensator comprising a flexible element is provided as described above, the lateral force that would result from forcing the tip in the sample surface is reduced and therewith the risk of an undesired lateral movement of the tip is mitigated while it contacts the sample surface.

In one example, the tip is suspended as part of a sub-cantilever, wherein the suspension members extend from a respective connection at a respective end of a respective one of the extension portions in a direction opposite to the direction of the extension portion to a respective suspension position of the sub-cantilever. In this example the scanning motion of the head is absorbed by a flexure of the suspension arms when the tip is in contact with the sample during the scanning motion of the head.

In another example the suspension arms have a meandering shape and are connected to the free end of the support portion. When the tip is in contact with the sample during the scanning motion of the head the scanning motion of the head is absorbed by a folding of the suspension arms. In some examples the extension portions typically have a thickness that is substantially larger than that of the elements connected thereto, such as the suspension members so that the extension portions can be considered as rigid.

In again further embodiments the motion compensator of the contact acoustic microscope comprises a flexible layer covering the tip. The flexible layer on the tip allows the tip to maintain a stable contact surface even during the scanning movement.

As mentioned above, the tip actuator oscillates the tip in a direction transverse to the scanning plane. Therewith the tip is oscillated between a first extreme value where the tip does not contact the sample surface to a second extreme value wherein the tip is maximally in contact with the sample surface and a maximum contact surface is achieved. A center value is further defined as a value that is half the sum of the first extreme value and the second extreme value. In an embodiment, the tip is longer in a position between a center value and the second extreme value than in a position between the center value and the first extreme value. This can be achieved by a redesigned probe such that with a suitable combination of the fundamental and higher harmonics, a tapping pattern is realized that allows for increased contact time per oscillation. Typically the quality factor of the probe is less than 10, preferably less than 3.

Alternatively or additionally this can be achieved by lowering the setpoint of the probe. These measures provide for an increased contact time per oscillation as well as an increase in stable contact time. A further increase of stable contact time is achieved by a relatively soft material of the tip or a coating thereof. In an exemplary embodiment, a cantilever provided from Si, having a Young's modulus of about 170 GPa has a tip covered with a layer of a material with a lower Youngs like SiO2 (Young's modulus of 70 Gpa), gold (Youngs modulus of 70 Gpa), PMMA (Young's modulus of ~3-5 Gpa). The layer of a material with a lower Youngs modulus is subject to a larger deformation than that which would occur in the core material of the tip. Therewith the layer contributes to a larger contact surface. With these measures it is achieved that the tip in its oscillating motion during a longer time interval contacts the surface of the sample with a sufficiently large contact surface while avoiding a too high pressure of the tip on the sample surface during this time interval.

In this or another embodiment the layer has a low friction. Therewith forces enacted on the sample by the tip during lateral movement of the tip with respect to the sample are reduced, which allows for a higher pressure of the tip on the sample, providing for a larger tip-sample contact area and therefore a higher acoustic signal level. In one example a single layer is provided on the tip of a material that both has a relatively low Young's modulus as compared to the core material of the tip and that also has a low friction coefficient. PTFE having a Young's modulus of 0.575 Gpa and a friction coefficient of 0.075 would comply with these requirements. In another example the core material of the tip is covered with a first layer of a material with a relatively low Young's modulus and with a second layer, covering the first layer and defining the contact surface of the tip, that has a relatively low friction, e.g. W2S or MoS2.

Preferably the interface layer has a high density. This contributes to an optimal acoustic impedance for a maximum effective acoustic transmission through the tip-sample contact. This effectively allows to get the same contact area at lower forces (increased mechanical performance) or for larger static forces before inducing damage and hence increases effective contact time per oscillation. For an optimal acoustic contact the interface layer has a thickness of $(1/4+n.1/2)\lambda$, wherein n is a natural number and $\lambda$ is the acoustic wavelength at a center frequency of the acoustic signal induced by the high frequency signal source. For example, the thickness is ¼, ¾, 1¼, 1¾, etc. wavelengths thick. Thicker layers may lead to lengthening of the acoustic echo due to reverberation but may further reduce the effective stresses encountered by the sample.

Alternatively or additionally at a point in time preceding the steps of scanning the sample, a surface of the sample is provided with an interface layer having a stiffness less than that of a core material of the tip. The interface layer on the surface of the sample maybe a sacrificial layer in that it is removed after completion of the scanning steps.

BRIEF DESCRIPTION OF THE DRAWINGS

These and other aspects are described in more detail with reference to the drawing. Therein:

FIG. 1 schematically shows a contact acoustic microscope;
FIG. 2 shows aspects of an embodiment of the contact acoustic microscope of FIG. 1 in more detail;
FIG. 2A shows a first example of an element in the embodiment of FIG. 2;
FIG. 2B shows a second example of an element in the embodiment of FIG. 2;
FIG. 3A, 3B and 3C shows exemplary elements for use in an alternative embodiment of the contact acoustic microscope of FIG. 1;
FIG. 4 schematically illustrates how a contact radius varies in time in accordance with the vertical position of the tip;
FIG. 5A illustrates a detail of a further embodiment of the acoustic scanning probe contact acoustic microscope of FIG. 1;
FIG. 5B schematically illustrates for this embodiment how the contact radius varies in time in accordance with the vertical position of the tip;
FIG. 6 schematically illustrates for another embodiment how the contact radius varies in time in accordance with the vertical position of the tip;
FIG. 7 schematically illustrates for again another embodiment how the contact radius varies in time in accordance with the vertical position of the tip;
FIG. 8A, 8B, 8C and 8D show a relationship between the contact radius and the static force for various circumstances.

DETAILED DESCRIPTION OF EMBODIMENTS

Like reference symbols in the various drawings indicate like elements unless otherwise indicated.

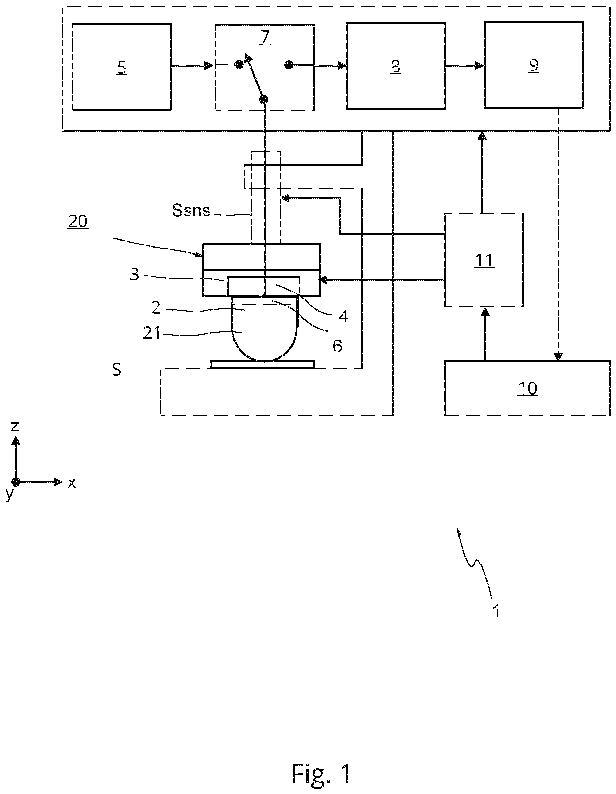

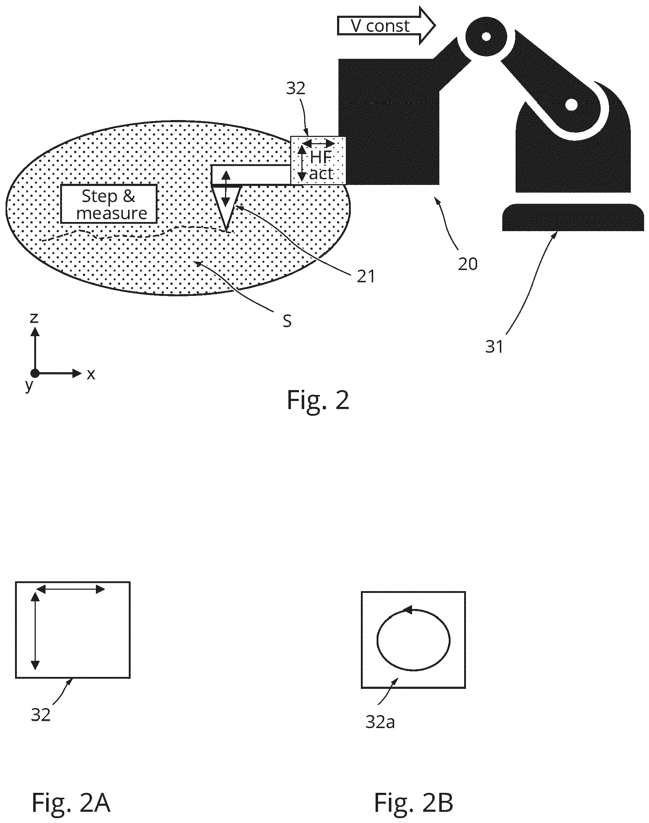

FIG. 1 schematically shows a contact acoustic microscope 1 that comprises a scanning head 20 with a tip 21, a scanning actuator 31 (See FIG. 2) a compensation actuator 32 (See FIG. 2), a tip actuator 4, a high frequency signal source 5, a transducer 6 coupled thereto, a signal processor 10 and an actuator controller 11. In this example the transducer 6 also serves as an acoustic sensor. In another example the acoustic sensor is provided as a separate element.

In operation the scanning actuator 31 laterally displaces the scanning head 20 relative to a sample S along a scanning path P in a scanning plane (x,y). The scanning path is for example linear or meandering along the surface.

The tip actuator 4 in operation oscillates the tip in a direction z transverse to the scanning plane to therewith provide for a time-dependent tip-sample contact surface A(t). The tip is for example formed on a resonant element, such as a cantilever or a membrane having a resonance frequency of a few hundred kHz and the tip actuator may drive the resonant element at a frequency that is approximately equal to the resonance frequency or a frequency deviating therefrom, e.g. at a lower drive frequency.

The high frequency signal source 5 and the transducer 6 coupled thereto generate an acoustic signal that is provided through the tip 21 to the sample. The acoustic signal may have a frequency in the range of 1 GHz to a few tens of GHz. The resolution that can be achieved is inversely proportional to the frequency, therewith the frequency should not be too low, e.g. not less than 0.1GHz. At higher frequencies, e.g. exceeding 200 GHz, the acoustic signal is substantially attenuated in the sample. By way of example the frequency is selected from a range of 0.5 GHz to 25 GHz dependent on the required resolution and the depth of the features to be detected. A frequency of 4 GHz is considered suitable for many practical applications. Therewith a sufficient resolution can be obtained at a detection depth in the order of tens of microns.

The tip-sample contact radius which determines the tip-sample contact surface can be expressed as:

$$a = F^{1/3}(DR)^{1/3}$$

Therein F is the static force exerted at the tip, R is the tip radius, and D is defined as:

$$D = \frac{3}{4}\left(\frac{1-\sigma_1^2}{E_1} + \frac{1-\sigma_2^2}{E_2}\right)$$

Wherein $E_1$ and $E_2$ respectively are the Young's modulus of the material of the tip and of the sample and $\sigma_1$ and $\sigma_2$ are Poisson's ratio's of these materials respectively.

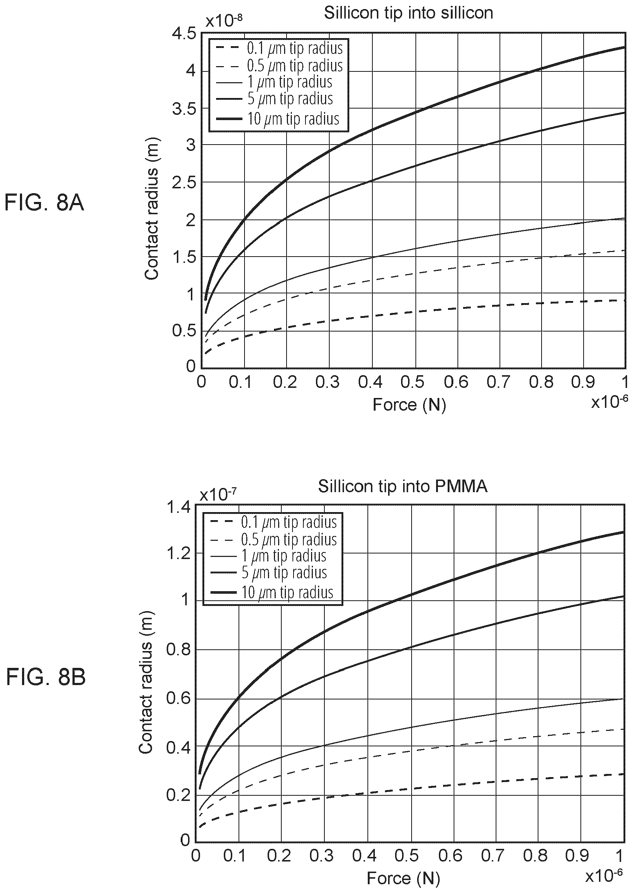

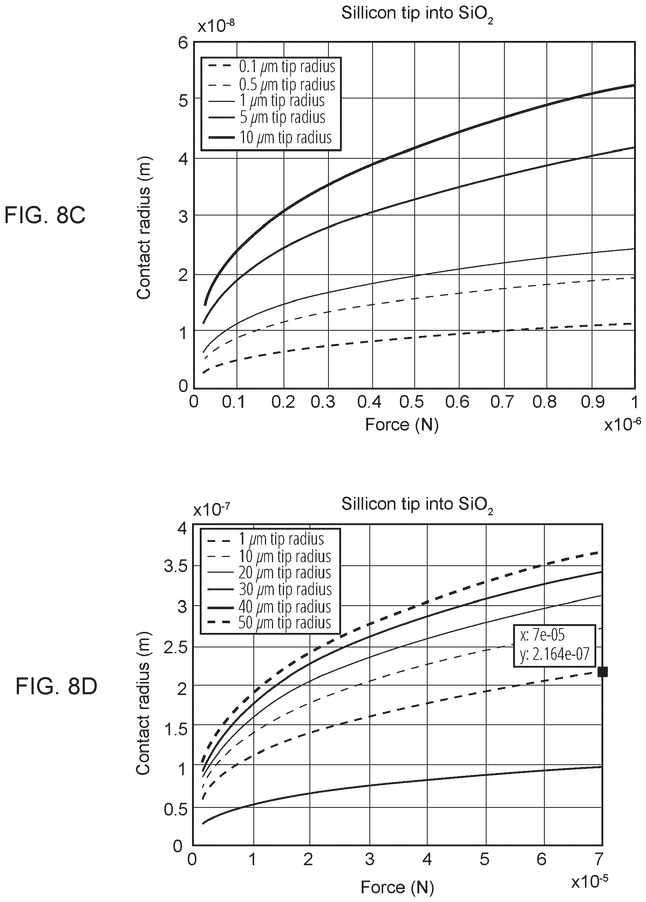

Therewith a desired contact radius 'a' can be obtained by a proper setting of the static pressure and the choice of the tip radius. By way of example this is shown in FIG. 8A and 8B for tip radii of 0.1, 0.5, 1, 5 and 10 micron. FIG. 8A shows how the contact radius (in m) is related to the static force (N) for a silicon tip and a silicon substrate. FIG. 8B shows the relationship for a silicon tip and a PMMA substrate. FIG. 8C shows a further example, wherein the substrate is of silicon dioxide.

By way of example it is presumed that the applied static force F is 300nN and that the tip diameter is 10 micron. In that case it can be seen in that the contact diameter achieved in the silicon dioxide substrate is 36 nm. An acoustic signal with a frequency of 6 GHz has a wavelength of 926 nm in the silicon dioxide substrate. Therewith the ratio of the contact diameter to the wavelength in this case is 1/12.8 which is sufficiently close to the value 0.5

As becomes apparent from FIG. 8A - 8C, the dependency of the contact diameter on variations of the static force decreases at a higher set value of the static force. Although it would be possible to achieve a large contact radius with a small contact force, the variations in the contact radius due to static force variations would be significant. These variations would mainly effect the transmission coefficient of the acoustic waves through the contact surface. For a static force of 100 nN +/- 10nN, the contact radius would vary with about 6.7 % and the acoustic transmission would vary with 13.8 %. This is considered acceptable for practical purposes. Therewith a set point for the static force of 100 nN or higher would be suitable. In case variations in the static force may be reduced to lower levels, or if less accuracy is required, also a lower set point for the static force may be applicable.

In commercially available contact acoustic microscopes the static force can be controlled in a range up to 70 μN. FIG. 8D shows the contact radius for various tip diameters in this range. Presuming that the tip diameter is 10 μm and that the setting of the static contact force is 20 μN, then the contact diameter of a silicon tip in a silicon dioxide substrate is 280 nm. In case the static contact force is set at 70 μN the contact diameter is increased to 430 nm. The compressive stress in these circumstances is 324 MPa and 482 MPa respectively. This is well below the compressive strength of silicon (3200-3400 MPa) and also well below the compressive strength of silicon dioxide (1100 - 1600 MPa).

In the example shown in FIG. 1, the transducer, typically a piezo electric transducer, also functions as an acoustic sensor 6 to provide a sense signal (Ssns) indicative for an acoustic signal received from the sample via the tip. In other embodiments a separate acoustic sensor may be provided.

The signal processor 10 in operation processes the sense signal to render subsurface information about the sample.

The actuator controller 11 controls the scanning actuator 31 and the tip actuator 4;

The motion compensator compensates a lateral movement of the scanning head to minimize a displacement of the tip 2 relative to the sample S while the tip 21 is in contact with the sample S. Therewith the scanning head can be moved continuously, for example with a speed of 1 to 10 mm/s. In the example shown in FIG. 2, the motion compensator is a compensating actuator 32. The compensating actuator 32 counteracts a motion induced by the scanning actuator 31 while the tip is in contact with the sample. In one example, shown in more detail in FIG. 2A, the compensating actuator 32 performs a linear motion in a lateral direction to counteract the scanning motion and a separate actuator provides for a linear motion in a direction z orthogonal to the sample surface to provide for the time-dependent tip-sample contact surface A(t). In another example, shown in more detail in FIG. 2B, the compensating actuator 32a performs a rotating motion rotating movement about an axis (here y) transverse to a motion direction (here x) of the scanning actuator 31 and transverse to a normal z of the scanning plane.

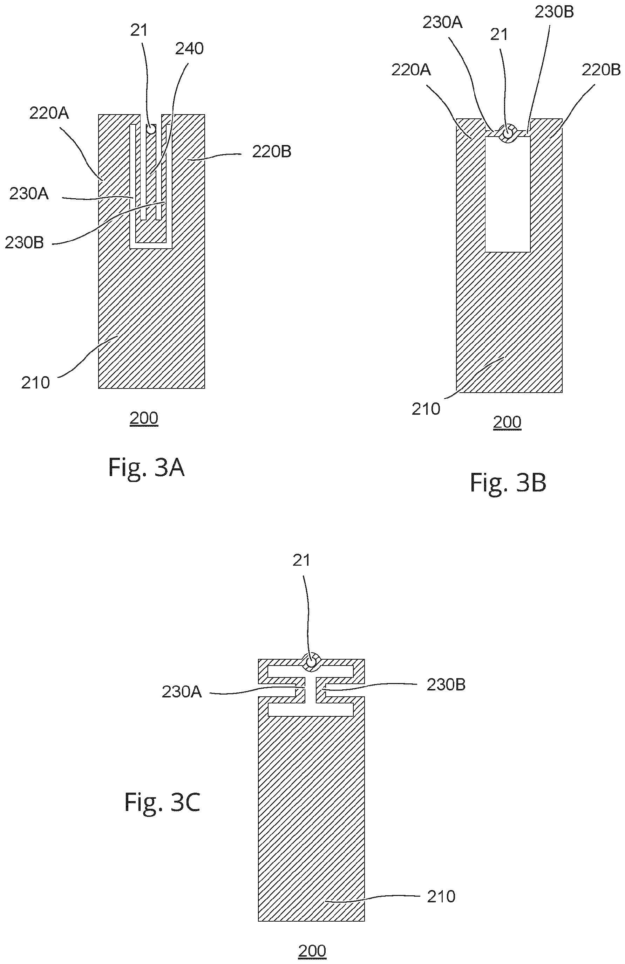

FIG. 3A, 3B and 3C shows examples of passive motion compensators that may be used in combination with an active motion compensator as discussed above or as an alternative thereof. These passive motion compensators comprise a flexible element that is configured to flex while the scanning actuator 31 laterally displaces the head 20 and the tip 21 sticks at a position where it is in contact with the sample S.

In the example of FIG. 3A, the flexible element is provided as a cantilever 200 having a support portion 210 and a first and a second extension portion 220A, 220B bifurcating from the support portion. Between the first and the second extension portion 220A, 220B the tip 21 is suspended as part of a sub-cantilever 240, wherein the suspension members 230A, 230B extend from a respective connection at a respective end of a respective one of the extension portions 220A, 220B in a direction opposite to the direction of the extension portion to a respective suspension position of the sub-cantilever 240.

In this embodiment, when the tip is in contact with the sample during the scanning motion of the head the scanning motion of the head is absorbed by a flexure of the suspension arms.

Also in the example of FIG. 3B, the flexible element is provided as a cantilever 200 having a support portion 210 and a first and a second extension portion 220A, 220B bifurcating from the support portion. In this case the suspension members are connected sideways to an end of a proper one of the extension portions. The suspension members 230A, 230B in this example are torsion beams that are configured to allow the tip to rotate about an axis defined by the suspension members relative to the scanning head. In this embodiment the tip, when in contact with the sample, and during the scanning motion of the head performs a movement wherein it rotates at the contact position with the sample relative to the sample and rotates about an axis defined by the suspension members relative to the scanning head.

In the example of FIG. 3C, the suspension arms 230A, 230B have a meandering shape and are connected to the free end of the support portion 210. When the tip is in contact with the sample during the scanning motion of the head the scanning motion of the head is absorbed by a folding or a stretching of the suspension arms.

As noted above, it is desirable for contact acoustic microscopy that a sufficient large contact surface is achieved between the tip and the sample, and also that large contact surface is maintained for a sufficiently long time. By way of example it is presumed that the acoustic frequency is 4GHz. In that case, the acoustic wavelength is in the order of 1 - 2 micron. In case the acoustic frequency is higher, the acoustic wavelength is accordingly smaller. For example in case of an acoustic frequency of 20 GHz, the acoustic wavelength in Si would be 0.425 micron. During an acoustic measurement the contact diameter of the area where the tip is in contact with the sample surface should be in the order of half the acoustic wavelength. In an acoustic measurement the delay is measured with which an echo is received of a the acoustic signal transmitted into the sample. Due to the presence of noise a single measurement typically does not suffice, necessitating repeating the measurement a few hundred times while the tip contacts the surface at a sufficiently large contact area. If by way of example the pulse-echo time in a measurement is 75 ns and the measurement is to be repeated 400 times, then the sufficiently large contact area needs to be maintained during 30 microseconds.

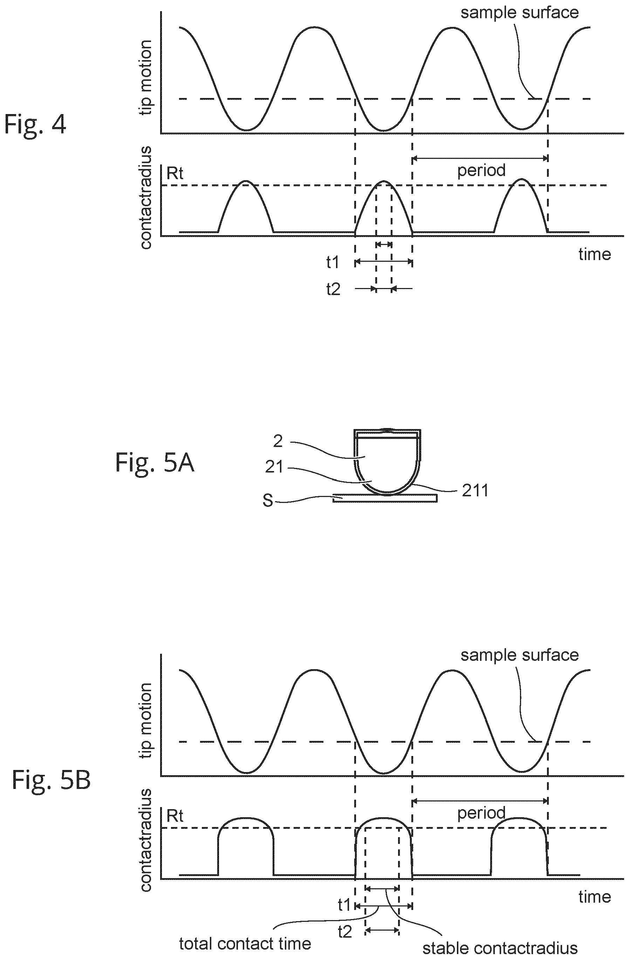

FIG. 4 schematically illustrates how the contact radius (See lower part of FIG. 4), which determines the contact surface, varies in time in accordance with the vertical position of the tip (See upper part of FIG. 4). In the upper part of FIG. 4, the dashed horizontal line indicates the height where the tip touches the sample surface. In the time intervals t1 wherein the tip height is less than this height value the tip and the sample have a non-zero contact surface. However, the contact radius should exceed a threshold value Rt (as shown by the dashed line in the lower part of FIG. 4) during a sufficiently long time t2 to enable a proper acoustic measurement. It may be contemplated to decrease the oscillation frequency with which the tip position oscillates between its extreme vertical positions, but this would be at the cost of the scanning efficiency.

In an embodiment as schematically shown in FIG. 5A, the time interval t2 wherein the contact surface is sufficiently large is increased without negatively affecting the scanning efficiency. In the embodiment shown in FIG. 5A, a surface of the tip is provided with an interface layer 211 having stiffness less than that of a core material of the tip and less than that of the sample surface. For example a tip 21 of Si may be provided with a layer of SiO2, PMMA or Au. The interface layer 211 on the tip more easily deforms than the tip itself, so that the sufficiently large contact surface can be achieved more easily, as is illustrated in FIG. 5B.

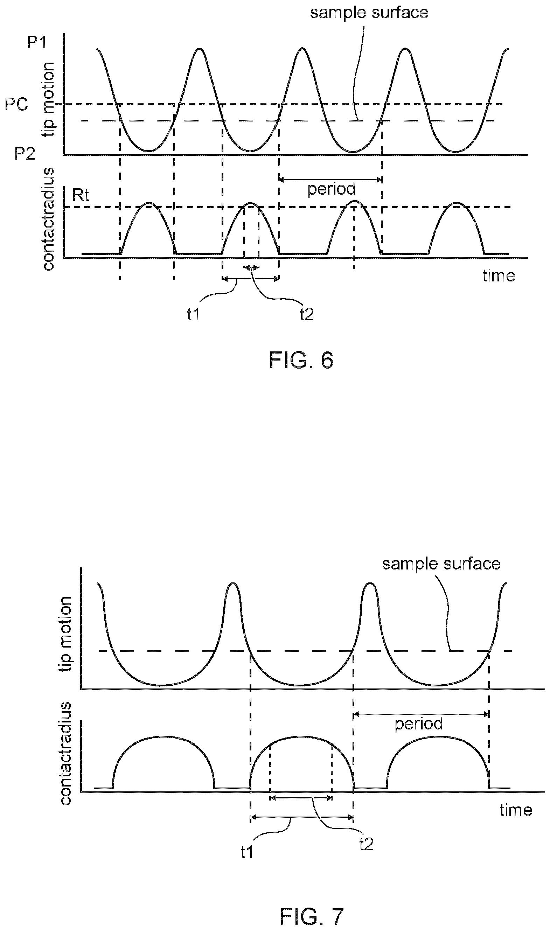

In another embodiment as shown in FIG. 6, the tip actuator is configured to induce an oscillating motion of the tip 21 in the direction of the surface of the sample S between a first extreme value P1 where the tip does not contact the sample surface to a second extreme value P2 wherein the tip is maximally in contact with the sample surface, wherein the tip is longer in a position between a center value PC and the second extreme value than in a position between the center value and the first extreme value, wherein the center value is half the sum of the first extreme value and the second extreme value. Therewith time interval t1 wherein the tip and the sample have a non-zero contact surface is increased and consequently also the time interval t2 wherein the contact radius exceeds the threshold value Rt is increased. One option to achieve this is by increasing the static pressure, but preferably this is achieved by an adaptation of the tip motion profile by a proper actuation signal or adapting the mechanical features of its suspension, e.g. by using a cantilever with a low quality factor e.g. less than 10, or even less than 3, or by a redesign of the probe such that it has next to its fundamental natural frequency one or more higher harmonics when actuated. Via a suitable combination of the fundamental and higher harmonics. Therewith a non sinusoidal motion profile is achieved wherein a sufficiently large contact surface is maintained during a longer time interval.

Still further it is possible to combine the measures described with reference to FIG. 5A, 5B and 6 to obtain a further increased time interval t2 as shown in FIG. 7.

In the claims the word "comprising" does not exclude other elements or steps, and the indefinite article "a" or "an" does not exclude a plurality. A single component or other unit may fulfill the functions of several items recited in the claims. The mere fact that certain measures are recited in mutually different claims does not indicate that a combination of these measures cannot be used to advantage. Any reference signs in the claims should not be construed as limiting the scope.

**Claims**

1.   A contact acoustic microscope (1), comprising:

the scanning head (20) with a tip (21);
a scanning actuator (31) for laterally displacing the scanning head (20) relative to a sample (S) along a scanning path (P) in a scanning plane (x,y);
a tip actuator (4) for moving the tip in a direction (z) transverse to the scanning plane to therewith provide for a time-dependent tip-sample contact surface (A(t));
a high frequency signal source (5) and a transducer (6) coupled to the high frequency signal source configured to generate an acoustic signal to be provided through the tip of the probe to the sample;
an acoustic sensor (6) to provide a sense signal (Ssns) indicative for an acoustic signal received from the sample via the tip;
a signal processor (10) to process the sense signal to render subsurface information about the sample;
an actuator controller (11) to control the scanning actuator (31) and the tip actuator (4);
a motion compensator to compensate a lateral movement of the scanning head to minimize a displacement of the tip (2) relative to the sample (S) while the tip (21) is in contact with the sample (S).

2.   The contact acoustic microscope (1) according to claim 1, wherein the motion compensator comprises a compensating actuator (32) that counteracts a motion induced by the scanning actuator (31) while the tip is in contact with the sample.

3.   The contact acoustic microscope (1) according to claim 2, wherein the compensation actuator (32) performs a rotating movement around an axis transverse to a motion direction of the scanning actuator (31) and transverse to a normal (z) of the scanning plane.

4.   The contact acoustic microscope (1) according to one of the previous claims, wherein the motion compensation actuator comprises a flexible element coupling the tip (21) to the scanning head (20), which is configured to flex, while the scanning actuator (31) laterally displaces the head (20) and the tip (21) sticks at a position where it is in contact with the sample (S).

5.   The contact acoustic microscope according to claim 4, wherein the flexible element comprises a cantilever (200) with a support portion (210) and a plurality of suspension members (230A, 230B) extending from the support portion (210) and wherein the tip (21) is suspended at mutually opposite lateral sides (symmetric or not) to an end of a respective one of the suspension members.

6.   The contact acoustic microscope according to claim 5, wherein the support portion (210) bifurcates into a first and a second extension portion (220A, 220B) and each suspension member suspends the tip at a respective side to a respective end of a respective extension portion.

7. The contact acoustic microscope according to claim 6, wherein the suspension members (230A, 230B) are torsion beams that are configured to allow the tip to rotate about an axis defined by the suspension members relative to the scanning head.

8. The contact acoustic microscope according to claim 6, wherein the tip (21) is suspended as part of a sub-cantilever (240), wherein the suspension members (230A, 230B) extend from a respective connection at a respective end of a respective one of the extension portions (220A, 220B) in a direction opposite to the direction of the extension portion to a respective suspension position of the sub-cantilever (240).

9. The contact acoustic microscope according to claim 6, wherein the suspension arms have a meandering shape (230A, 230B) and are connected to the free end of the support portion (210).

10. The contact acoustic microscope according to any of the preceding claims, wherein the probe actuator system is configured to induce an oscillating motion of the tip (21) in the direction of the surface of the sample (S) between a first extreme value (P 1) where the tip does not contact the sample surface to a second extreme value (P2) wherein the tip is maximally in contact with the sample surface, wherein the tip is longer in a position between a center value (PC) and the second extreme value than in a position between the center value and the first extreme value, wherein the center value is half the sum of the first extreme value and the second extreme value.

11. The contact acoustic microscope according to any of the preceding claims, wherein a surface of the tip is provided with an interface layer (211) having stiffness less than that of a core material of the tip and less than that of the sample surface.

12. The contact acoustic microscope according to claim 11, wherein the interface layer (211) has a density that is higher than that of the core material of the tip and/or sample.

13. The contact acoustic microscope according to claim 11 or 12, wherein the interface layer (211) provides for a reduced friction between the tip and the sample surface.

14. The contact acoustic microscope according to claim 11, 12 or 13, wherein the interface layer (211) has a

thickness of about $\frac{1}{4}\lambda + n^*\lambda/2$, wherein $\lambda$ is a wavelength of the acoustic signal at a center frequency.

15. A method for inspecting a sample (S) with a contact acoustic microscope device (1), the contact acoustic microscope (1) comprising a scanning head (20) with a tip (21), the method comprising:

laterally displacing the scanning head (20) relative to the sample (S) along a scanning path (P) in a scanning plane (x,y);
oscillating the tip in a direction (z) transverse to the scanning plane to therewith provide for a time-dependent tip-sample contact surface (A(t));
providing through the tip a high frequency acoustic signal to the sample;
providing a sense signal (Ssns) indicative for an acoustic signal originating from the sample to the tip;
processing the sense signal to render subsurface information about the sample;
compensating a lateral movement of the scanning head to minimize a displacement of the tip (2) relative to the sample (S) while the tip (21) is in contact with the sample (S).

Fig. 1

Fig. 2

Fig. 2A

Fig. 2B

Fig. 3A

200

Fig. 3B

200

Fig. 3C

200

Fig. 4

Fig. 5A

Fig. 5B

FIG. 6

FIG. 7

FIG. 8A

FIG. 8B

FIG. 8C

Sillicon tip into SiO₂

FIG. 8D

Sillicon tip into SiO₂

Europäisches
Patentamt

European
Patent Office

Office européen
des brevets

# EUROPEAN SEARCH REPORT

**Application Number**

EP 24 17 9080

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/361103 A1 (HOFFROGGE PETER [DE] ET AL) 28 November 2019 (2019-11-28) * Abstract, Desc. [0001], [0070]-[0080], Fig. 1 * ----- | 1-15 | INV. G01N29/06 G01Q60/32 |
| A | US 2022/091069 A1 (VAN ES MAARTEN HUBERTUS [NL] ET AL) 24 March 2022 (2022-03-24) * Abstract, Desc.[0002], [0040]-[0045], Fig. 1 * ----- | 1-15 | |
| A | US 2022/236228 A1 (VAN ES MAARTEN HUBERTUS [NL] ET AL) 28 July 2022 (2022-07-28) * Abstract, Desc. [0001], [0046]-[0053], Fig. 1 * ----- | 1-15 | |

**TECHNICAL FIELDS SEARCHED (IPC)**

G01N
G01Q

The present search report has been drawn up for all claims

| Place of search | Date of completion of the search | Examiner |
|---|---|---|
| Munich | 4 November 2024 | Reim, Klaus |

EPO FORM 1503 03.82 (P04C01)

## ANNEX TO THE EUROPEAN SEARCH REPORT
## ON EUROPEAN PATENT APPLICATION NO.

EP 24 17 9080

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2024

| Patent document cited in search report | Publication date | Patent family member(s) | | Publication date |
|---|---|---|---|---|
| US 2019361103 A1 | 28-11-2019 | CN | 112166320 A | 01-01-2021 |
| | | EP | 3803372 A2 | 14-04-2021 |
| | | JP | 7410057 B2 | 09-01-2024 |
| | | JP | 2021525366 A | 24-09-2021 |
| | | JP | 2024029054 A | 05-03-2024 |
| | | KR | 20210014112 A | 08-02-2021 |
| | | SG | 11202011257P A | 30-12-2020 |
| | | TW | 202001241 A | 01-01-2020 |
| | | US | 2019361103 A1 | 28-11-2019 |
| | | WO | 2019224119 A2 | 28-11-2019 |
| US 2022091069 A1 | 24-03-2022 | EP | 3690449 A1 | 05-08-2020 |
| | | EP | 3921655 A1 | 15-12-2021 |
| | | KR | 20210141468 A | 23-11-2021 |
| | | US | 2022091069 A1 | 24-03-2022 |
| | | WO | 2020162743 A1 | 13-08-2020 |
| US 2022236228 A1 | 28-07-2022 | EP | 3745125 A1 | 02-12-2020 |
| | | EP | 3977114 A1 | 06-04-2022 |
| | | US | 2022236228 A1 | 28-07-2022 |
| | | WO | 2020242304 A1 | 03-12-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WEISS, LEMOR et al.** IEEE Trans. Ultrason. Ferroelectr. *Freq. Contr.*, 2007, vol. 54, 2257